Europäisches Patentamt

European Patent Office

Office européen des brevets

(19)

(11) Veröffentlichungsnummer: **0 052 274**
**A2**

(12) # EUROPÄISCHE PATENTANMELDUNG

(21) Anmeldenummer: **81109105.7**

(22) Anmeldetag: **28.10.81**

(51) Int. Cl.³: **C 08 F 222/06**
**C 08 L 35/00**

(30) Priorität: **11.11.80 DE 3042471**

(43) Veröffentlichungstag der Anmeldung:
**26.05.82** Patentblatt **82/21**

(84) Benannte Vertragsstaaten:
**AT BE CH DE FR GB IT LI NL SE**

(71) Anmelder: **BAYER AG**
**Zentralbereich Patente, Marken und Lizenzen**
**D-5090 Leverkusen 1, Bayerwerk(DE)**

(72) Erfinder: **von Bonin, Wulf, Dr.**
**Mendelsohnstrasse 30**
**D-5090 Leverkusen 1(DE)**

(54) **Maleinsäureanhydridcopolymerisate und ihre Herstellung.**

(57) Maleinsäureanhydridcopolymerisate, insbesondere mit
(Meth)Acrylsäure oder deren Derivaten, werden vorteilhaft
durch radikalische Polymerisation in der Maleinsäureanhyd-
rid-Schmelze hergestellt.

EP 0 052 274 A2

BAYER AKTIENGESELLSCHAFT     5090 Leverkusen, Bayerwerk
                            Jo/bc/c
Zentralbereich
Patente, Marken und Lizenzen


Maleinsäureanhydridcopolymerisate und ihre Herstellung

Die Erfindung betrifft ein Verfahren zur Herstellung von Copolymerisaten aus Maleinsäureanhydrid,(Meth)Acrylsäure oder (Meth)Acrylsäurederivaten und gegebenenfalls weiteren Comonomeren durch radikalische Polymerisation in geschmolzenem Maleinsäureanhydrid sowie die so hergestellten Copolymerisate.

Copolymerisate des Maleinsäureanhydrids sind seit langem bekannt. Als Comonomere haben sich 1-Olefine, Vinylaromaten, Vinylester und Vinylether bewährt, während beispielsweise (Meth)Acrylsäure oder (Meth)Acrylsäurederivate nur schlecht mit Maleinsäureanhydrid copolymerisiert werden konnten. Da Maleinsäureanhydrid mit den zuerst genannten Comonomeren im allgemeinen sehr heftig reagiert, werden Maleinsäureanhydridcopolymerisate nach den bisher bekannten Verfahren in Lösungs- oder Suspensionsmitteln hergestellt und dann durch Aufarbeitung gewonnen. Schmelzpolymerisationen verwenden nach bisher bekanntem Stand der Technik Maleinsäureanhydrid nur in untergeordneten Mengen als Comonomeres.

Le A 20 661

Überraschenderweise wurde gefunden, daß das bei 52°C schmelzende Maleinsäureanhydrid oberhalb seiner Schmelztemperatur selbst als Polymerisationsmedium verwendet werden kann, insbesondere für Copolymerisationen mit (Meth)Acrylsäure und deren Abkömmlingen, ohne daß eine unkontrollierte Reaktion zu nicht-reproduzierbaren und unbrauchbaren Produkten eintritt.

Im Laufe der Polymerisation wird in die sich bildenden Polymerisate Maleinsäureanhydrid eingebaut, gleichzeitig wird die Polymerisation so geregelt, daß bei Temperaturen unter 200°C rührbare Polymerisate entstehen. Dieser Effekt kann insbesondere durch den Zusatz von sogenannten Reglern verstärkt werden. Dadurch entfällt die Notwendigkeit zusätzliche Lösungs- oder Suspensionsmittel mitverwenden zu müssen. Jedoch ist es auch möglich bis zu 20 Gew.-% der Maleinsäureanhydridmenge an Lösungs- bzw. Suspensionsmitteln zuzusetzen. In Betracht kommen dafür beispielsweise Kohlenwasserstoffe, Halogenkohlenwasserstoffe, Ether, Ketone oder Ester bzw. deren Gemische. Da im allgemeinen die Lösungsmittel jedoch den Polymerisationsprozeß behindern, insofern als mit einer verringerten Polymerisationsgeschwindigkeit und einem verringerten Einbau an Maleinsäureanhydrid zu rechnen ist, werden diese Zusätze möglichst vermieden, wodurch sich auch aufwendige Abtrennungs- und Aufarbeitungsverfahrensschritte vermeiden lassen.

Gegenstand der Erfindung ist somit ein Verfahren zur Herstellung von Maleinsäureanhydrid-Copolymerisaten,

Le A 20 661

dadurch gekennzeichnet, daß Maleinsäureanhydrid in der Schmelze mit Monomeren, insbesondere mit (Meth)Acrylsäure und/oder deren Derivaten und gegebenenfalls weiteren copolymerisierbaren Monomeren in Gegenwart von Reglern und Initiatoren bei Temperaturen zwischen 60 und 200°C radikalisch polymerisiert wird. Bezogen auf die Gesamtheit der zum Einsatz kommenden Monomeren, zu denen auch das zunächst als Reaktionsmedium dienende Maleinsäureanhydrid zu zählen ist, kommen folgende Mengen zum Einsatz: 90 bis 20, vorzugsweise 75 bis 30 Gew.-% Maleinsäureanhydrid und 10 bis 80, vorzugsweise 20 bis 70 Gew.-% Comonomere, wobei wenigstens 50 Gew.-%, vorzugsweise 65 Gew.-% dieser Comonomerenmenge (Meth)Acrylsäure oder deren Derivate sind.

Ein weiterer Gegenstand der Erfindung sind die so hergestellten Copolymerisate aus 90 bis 20 Gew.-%, vorzugsweise 75 bis 30 Gew.-% Maleinsäureanhydrid und 10 bis 80, vorzugsweise 25 bis 70 Gew.-% von Comonomeren, deren Menge wenigstens zu 50 Gew.-% aus (Meth)Acrylsäure oder deren Derivaten besteht. Vorzugsweise sind wenigstens 65 Gew.-% der Comonomerenmenge Acrylmonomere.

Bezogen auf die gesamte Monomerenmenge werden 0,01 bis 2, vorzugsweise 0,1 bis 1 Gew.-% an Initiatoren und 0 bis 5, vorzugsweise 0,3 bis 1,5 Gew.-% Regler hinzugegeben.

Als Initiatoren für die radikalische Polymerisation kommen die bekannten Initiatoren auf Basis von Redox-systemen, Azoverbindungen oder peroxidischen Verbin-dungen in Frage; auch energiereiche Strahlung oder Hitze kommen in Betracht. Bekannte Initiatoren sind

Le A 20 661

z.B. Azodiisobutyronitril, tert.-Butylperoctoat und Di-tert.-butylperoxid.

Als Regler, die entweder im vorgelegten Reaktionsgemisch oder auch im Zulauf der Comonomeren oder in beiden Phasen enthalten sein können, kommen die als Regler bekannten Verbindungen in Frage, beispielsweise Phenole oder Mercaptane. Als besonders wertvoll haben sich im Rahmen der vorliegenden Erfindung Enolether von Tetrahydrobenzaldehyden erwiesen, z.B. der Benzylenolether aus 1,2,5,6-Tetrahydrobenzaldehyd, (1,2,5,6-Tetrahydrostyrylbenzylether).

Die Polymerisation wird so durchgeführt, daß zunächst das geschmolzene Maleinsäureanhydrid das Polymerisationsmedium darstellt. Bei weiter fortschreitender Polymerisation, wenn der überwiegende Teil des anwesenden Maleinsäureanhydrids durch Copolymerisation verbraucht ist, kann die Aufgabe des Polymerisationsmediums von der vorliegenden Polymerisatschmelze selbst übernommen werden. Nicht-umgesetztes Maleinsäureanhydrid kann in den Polymerisaten entweder belassen oder durch Extraktion oder Destillation entfernt werden. Immer dann, wenn auf einen möglichst vollständigen Umsatz des Maleinsäureanhydrids kein Wert gelegt wird, wird man Maleinsäureanhydrid im gewichtsmäßigen Überschuß über die anderen Comonomeren vorlegen und anschließend das Polymerisat vom überschüssigen Maleinsäureanhydrid abtrennen. Wenn jedoch das ursprünglich als Polymerisationsmedium fungierende Maleinsäureanhydrid möglichst vollständig in die Polymerisation mit einbezogen werden soll, ist es zweckmäßig, zunächst

Le A 20 661

eine Lösung eines Teils der die notwendigen Hilfsstoffe enthaltenden Comonomerenmenge im überschüssigen Maleinsäureanhydrid zur Polymerisation zu bringen
und dann die weiteren Anteile der Comonomeren-Reaktionslösung, gegebenenfalls mit weiterem Maleinsäureanhydrid, nachzudosieren. Bei dieser Verfahrensweise
lassen sich leicht Polymerisate herstellen, die einen
die verwendete Maleinsäureanhydridmenge übertreffenden
Comonomerenanteil enthalten.

Vorzugsweise wird zwischen 120 und 180°C polymerisiert,
gegebenenfalls unter Druck. Obgleich es empfehlenswert
ist in Inertgasatmosphäre zu arbeiten, um Verfärbungen
zu vermeiden, läßt sich die Polymerisation auch ohne
Schutzgas durchführen.

Als (Meth)Acrylsäureverbindungen kommen beispielsweise
Acrylsäure, Methacrylsäure und die Ester dieser Säuren
mit Alkoholen aliphatischer, araliphatischer, cyclischer oder aromatischer Natur in Frage, insbesondere
die Ester der aliphatischen Alkohole mit 1 bis 22 Kohlenstoffatomen, vorzugsweise von Methanol, Ethanol,
Propanol, Butanol, Dodecanol, Octadecanol, Cyclohexanol und Benzylalkohol. Weitere in Frage kommende Derivate der Acrylsäure bzw. Methacrylsäure sind die entsprechenden Nitrile, Amide oder N-substituierten Amide
wie Acrylnitril, Acrylamid, Acrylamidmethylolether,
Diacetonacrylamid, N-Ethylacrylamid bzw. die entsprechenden Methacrylsäureabkömmlinge.

Bevorzugte Acryl- und Methacrylmonomere sind erfindungsgemäß Methacrylsäure, Acrylsäure sowie die aliphatischen Ester dieser Säuren mit Alkoholen mit 1
bis 18 Kohlenstoffatomen.

Zusätzlich verwendbare radikalisch polymerisierbare
Monomere sind beispielsweise Olefine wie Ethylen, Propylen, 1-Buten, 1-Hexen, 1-Octen, Isobuten, Diisobutylen, Limonen, Cyclohexen, Norbornen, Butadien, Isopren,
1-Octadecen, Vinylverbindungen wie Vinylester, z.B.
Vinylacetat, Vinylpivalat, Vinylpropionat, Isopropenylacetat, Vinylhalogenide wie Vinylchlorid, Vinylidenchlorid, Vinylaromaten wie Vinylnaphthalin, Styrol,
Vinylpyrridin, Vinylpyrrolidon, Vinylamide wie Vinylacetamid, Vinylether wie Vinylmethylether, Vinylethylether und Vinylisobutylether oder sonstige Vinylverbindungen wie Vinylmethylketon, Vinylethylsulfon,
Allylverbindungen wie Ester und Ether des Allylalkohols, Acrolein und dessen Acetale oder Anhydride,
Vollester oder Teilester der Itaconsäure, Fumarsäure und Maleinsäure bzw. Imide und Amide dieser
Säuren wie Maleinimid, N-Cyclohexylmaleinimid, N-
Phenylmaleinimid und N-Methylmaleinimid.

Die erfindungsgemäß erhältlichen Polymerisate stellen
wertvolle Zwischenprodukte für polymeranaloge Reaktionen, z.B. an der Anhydridgruppe, dar. Sie sind in
Form ihrer wäßrigen, alkalischen oder ammoniakalischen
Lösungen als Emulgatoren, Dispergatoren, Schlichten,
Sequestriermittel, Papierhilfsmittel, Klebstoffe,
Gerbstoffe, Hilfsmittel für die Fotoindustrie,
Antistatika, Hilfsmittel für die Zementverarbeitun,

Le A 20 661

für Bohrspülungen und Farbstofformulierungen verwendbar. Die Polymerisate selbst eignen sich als Klebstoffkomponenten, als Zusatzmittel zu Lacken und Kunststoffen bzw. zu Kautschuk. Durch ihre Anhydridgruppierungen können sie als Vernetzer wirken oder lassen sich selbst vernetzen. Sie können als Haftvermittler in Kunststoffen bzw. bei der Folienproduktion Verwendung finden. Sie sind thermoplastisch oder aus Lösung bzw. Emulsion oder Suspension verarbeitbar.

Le A 20 661

- 8 -

Beispiel 1

In 150 g Maleinsäureanhydrid werden bei 80°C 60 g Methacrylsäure und 0,4 g Di-t-Butylperoxid in ein mit Rückflußkühler versehenes Reaktionsgefäß eingetragen. Man erhitzt unter Rühren auf 150°C. Bei dieser Temperatur setzt die Polymerisation ein. Die Polymerisationssuspension wird nach 3 Stunden bei ca. 80°C abfiltriert. Man isoliert ca. 75 g Polymerisat, das in Ammoniak gelöst und anschließend mit Salzsäure gefällt wird. Das gereinigte Polymerisat zeigt im IR-Spektrum Amidbanden, die durch Umsetzung der eingebauten Maleinhydridgruppen mit Ammoniak entstanden sind. K-Salze des Polymerisats können als Antistatika eingesetzt werden.

Beispiel 2

In ein mit Rückflußkühler und Rührer versehenes Reaktionsgefäß werden 150 g Maleinsäureanhydrid, 50 g Acrylsäure, 5 g 1,2,5,6-Tetrahydrostyrylbenzylether sowie 0,4 g Azodiisobutyronitril eingefüllt. Man erhitzt auf 80°C. Etwa 15 Minuten nach Erreichen der Reaktionstemperatur entsteht zunächst eine Trübung, dann fällt das Polymerisat als weiche, gut rührbare Phase aus. Man erhöht die Temperatur auf 130°C und tropft unter Rühren in die Vorlage innerhalb von 15 Minuten eine Lösung von 0,1 g t-Butylperoctoat und 0,2 g Di-t-Butylperoxid in 50 g Acrylsäure ein. Man erhält eine viskose, gut rührbare homogene Polymerisatphase. 10 Minuten nach Eintragen des ersten Mono-

Le A 20 661

- 9 -

merenzusatzes wird auf 150°C erhitzt und in ca. 10
Minuten eine Lösung von 0,2 g Di-t-Butylperoxid in
50 g Acrylsäure eingetragen. Es bildet sich eine homogene gut rührbare Polymerisatschmelze, die nach einstündigem Nachrühren auf eine Unterlage ausgegossen
wird, wobei sie erstarrt.

Der Ausdampfverlust bei 150°C liegt unter 10 %.

Lösungen des Polymerisates in Wasser können als Sequestriermittel verwendet werden. Lösungen des Acrylsäure-
Maleinanhydridcopolymerisates in wäßrigem Ammoniak können als wasserlösliche Klebstoffe oder als Dispergiermittel Verwendung finden.

Beispiel 3

150 g Maleinsäureanhydrid werden mit 1,5 g 1,2,5,6-
Tetrahydrostyrylbenzylether sowie 0,4 g t-Butylperoctoat und 50 g Acrylnitril auf 80°C erhitzt. Etwa 5
Minuten nach Erreichen der Reaktionstemperatur beginnt
die Polymerisation unter Bildung einer Polymerisatsuspension. Nach ca. 1 Stunde wird die Temperatur auf
120°C erhöht und eine Lösung von 0,2 g t-Butylperoctoat
und 0,4 g Di-t-Butylperoxid in 100 g Acrylnitril sowie
3 g des Enolethers im Verlaufe von ca. 50 Minuten hinzugegeben. Dann rührt man weitere 3 Stunden. Es bildet sich eine gut rührbare breiige Polymerisatsuspension. Diese wird mit Aceton ausgekocht. Das so gereinigte Polymerisac ist in Dimethylformamid glatt
löslich und es zeigt im IR-Spektrum Banden für die

Le A 20 661

Anhydridgruppe. Es kann als reaktiver Füllstoff für Kautschuk oder Polyurethane eingesetzt werden.

Beispiel 4

150 g Maleinsäureanhydrid werden auf 150°C erhitzt. Dann gibt man im Laufe von 1,5 Stunden eine Lösung von 0,1 g t-Butylperoctoat und 2 g Di-t-Butylperoxid in 300 g Butylacrylat hinzu.

Es bildet sich zunächst eine viskose homogene Polymerisatlösung, die nach Eintragen der gesamten Monomermenge zunehmend viskoser wird, aber gut rührbar bleibt. Etwa 1,5 Stunden nach dem Eintragen des Monomeren und gutem Rühren bei 150 bis 160°C wird die Polymerisatschmelze abgelassen. Das Polymerisat ist in wäßrigem Ammoniak löslich. Es ist in Form dieser Lösungen als Emulgator einsetzbar. Das Polymerisat selbst kann als Schmelzkleber eingesetzt werden.

Beispiel 5

150 g Maleinsäureanhydrid werden auf 120°C erhitzt. Dann trägt man unter Rühren im Verlaufe von 0,5 Stunden eine Lösung folgender Komponenten in den Reaktionsautoklaven ein:

70 g Vinylacetat, 80 g Methylmethacrylat, 5 g 1,2,5,6-Tetrahydrostyrylbenzylether, 0,4 g t-Butylperoctoat sowie 1.^ g Di-t-Butylperoxid. Es bildet sich eine

Le A 20 661

hochviskose, rührbare Polymerisatschmelze, die bei 120°C 0,5 Stunden nachgerührt wird. Das Polymerisat ist in wäßrigem Ammoniak löslich. Diese Lösungen können als Dispergiermittel Verwendung finden.

## Beispiel 6

150 g Maleinsäureanhydrid werden auf 120°C erhitzt. Dann trägt man unter Rühren im Verlaufe von 0,5 Stunden eine Lösung folgender Komponenten in das Reaktionsgefäß ein:

40 g Styrol, 60 g Acrylsäure, 5 g 1,2,5,6-Tetrahydrostyrylbenzylether, 0,2 g t-Butylperoctoat, 0,3 g Di-t-Butylperoxid. Während des Eintragens wird die Temperatur auf 150°C gesteigert. Dann wird 0,5 Stunden bei 160°C nachgerührt. Es entsteht eine hochviskose rührbare Polymerisatschmelze. Diese wird nach dem Abkühlen zerkleinert und mit Wasser ausgekocht. Das Polymerisat ist in wäßrigem Ammoniak löslich und kann als Dispergiermittel Verwendung finden.

Le A 20 661

- 12 -

Patentansprüche

1. Verfahren zur Herstellung von Maleinsäureanhydrid-Copolymerisaten, dadurch gekennzeichnet, daß Maleinsäureanhydrid in der Schmelze radikalisch copolymerisiert wird.

2. Verfahren nach Anspruch 1, dadurch gekennzeichnet, daß Maleinsäureanhydrid in der Schmelze mit (Meth) Acrylsäure oder deren Derivate und gegebenenfalls weiteren copolymerisierbaren Monomeren in Gegenwart von Reglern und Initiatoren bei Temperaturen zwischen 60 und 200°C radikalisch polymerisiert werden.

3. Verfahren nach Anspruch 1, dadurch gekennzeichnet, daß die eingesetzte Monomerenmenge aus 90 bis 20 Gew.-% Maleinsäureanhydrid und 10 bis 80 Gew.-% an Comonomeren besteht, deren Menge wenigstens zu 50 Gew.-% aus (Meth)Acrylsäure oder deren Derivate besteht.

4. Verfahren nach Anspruch 1, dadurch gekennzeichnet, daß bezogen auf die gesamte Monomerenmenge 0,01 bis 2 Gew.-% an Initiatoren und 0 bis 5 Gew.-% an Regler zugegeben werden.

5. Verfahren nach Anspruch 1, dadurch gekennzeichnet, daß die Schmelze bis zu 20 Gew.-% der Maleinsäureanhydridmenge an Lösungs- oder Suspensionsmitteln enthalten kann.

Le A 20 661

6. Verfahren nach Anspruch 4, dadurch gekennzeichnet, daß als Regler Enolether von Tetrahydrobenzaldehyden, insbesondere 1,2,5,6-Tetrahydrostyrylbenzylether verwendet wird.

7. Verfahren nach Anspruch 1, dadurch gekennzeichnet, daß lösungsmittelfrei polymerisiert wird.

8. Verfahren nach Anspruch 1, dadurch gekennzeichnet, daß die Derivate der (Meth)Acrylsäure Ester mit aliphatischen, araliphatischen, cyclischen oder aromatischen Alkoholen, Nitrile oder Amide sind und daß als weitere Comonomere Olefine, Vinylverbindungen, Allylverbindungen, Vollester, Teilester, Amide oder Imide der Itaconsäure, Fumarsäure oder Maleinsäure verwendet werden.

9. Nach den Verfahren der Ansprüche 1 bis 8 erhaltene Copolymerisate.

10. Verwendung der nach den Ansprüchen 1 bis 8 erhaltenen Zwischenprodukte für polymeranaloge Reaktionen, als Emulgatoren, Dispergatoren, Schlichten, Sequestriermittel, Papierhilfsmittel, Klebstoffe, Gerbstoffe, Hilfsmittel für die Fotoindustrie, Antistatika, Hilfsmittel für die Zementverarbeitung, für Bohrspülungen und Farbstofformulierungen sowie als Zusatzmittel für Lacke, Kunststoffe und Kautschuk.

Le A 20 661